# EUROPEAN PATENT APPLICATION

(11) **EP 2 578 894 A1**
(43) Date of publication of application: **10.04.2013**
(21) Application number: 11792311.0
(22) Date of filing: 30.05.2011
(51) Int. Cl.: F16C 33/76, F16C 19/36, F16C 33/66, F16J 15/32

(54) **ROLLING BEARING**

(30) Priority: 07.06.2010 JP 2010129693
(71) Applicant: NTN Corporation, Osaka-shi, Osaka 550-0003 (JP)
(72) Inventor: SHIMIZU, Yasuhiko, Kuwana-shi Mie 511-8678 (JP); MURAKAMI, Fumihiro, Kuwana-shi Mie 511-8678 (JP)
(74) Representative: Behrmann, Niels
(86) International application number: PCT/JP2011/062330
(87) International publication number: WO 2011/155354

(57) **Abstract**

A rolling bearing assembly includes an inner ring (1) and an outer ring (2), and a plurality of rolling elements (3) interposed between the inner ring (1) and the outer ring (2). A sealing device (5) having a base end fixed to the inner ring (1) and also having a tip end held in contact with the outer ring (2) to thereby seal a bearing space delimited between the inner ring (1) and the outer ring (2) is provided in the bearing assembly. The sealing device (5) referred to above has a portion thereof that is in the form of a foreign matter intrusion preventing member (8) made of a material capable of permitting lubricating oil to pass therethrough, but preventing an intrusion of a solid foreign matter.

## Description

### CROSS REFERENCE TO THE RELATED APPLICATION

This application is based on and claims Convention priority to Japanese patent application No. 2010-129693, filed June 7, 2010 in Japan, the entire disclosure of which is herein incorporated by reference as a part of this application.

### BACKGROUND OF THE INVENTION

### (Field of the Invention)

The present invention relates to a rolling bearing assembly and, more specifically, to a rolling bearing assembly of an oil lubricated type that is largely employed in, for example, construction machines and equipments and general industrial machines and equipments.

### (Description of Related Art)

A bearing assembly that is employed in, for example, some of travelling sprockets, employed in construction machines and equipments, and some of wheel supports and transmissions employed in, for example, dump trucks having a high overall body weight, does not make use of any sealing member but is used under an oil lubricated system and is operated smoothly when oil being circulated within a confined space is supplied to the bearing assembly.

### [Prior Art Literature]

[Patent Document 1] Japanese Patent No. 4348955
[Patent Document 2] JP Laid-open Patent Publication No. 2010-19296

In the event that in any of the travelling sprockets, wheels and transmissions a mechanism or the like is employed which accompanies a frictional wear of one or more gears employed in a reduction gear units, intrusion of the circulated oil, admixed with frictionally ground particles, into the bearing assembly may lead to troubles in function of the bearing assembly. In this respect, see the patent documents 1 and 2 listed above. Once this happens, there is the risk that the service life of the bearing assembly will become short.

### SUMMARY OF THE INVENTION

In view of the foregoing, an object of the present invention is therefore to provide a rolling bearing assembly of a type capable of maintaining the functionality as a bearing assembly, for which an undesirable intrusion of foreign matter such as, for example, frictionally ground particles, that is admixed in lubricating oil, into the bearing assembly is prevented to allow only clean oil to be supplied into the bearing assembly as the lubricating oil.

The rolling bearing assembly according to a first aspect of the present invention is a rolling bearing assembly including an inner ring, an outer ring, and a plurality of rolling elements interposed between the inner and outer rings, in which a sealing device having a base end (or first end) fixed to one of the inner and outer rings and also having a tip end (or second end opposite to the first end) held in contact with the other of the inner and outer rings to thereby seal a bearing space delimited between the inner and outer rings. The sealing device referred to above has at least a portion thereof that is in the form of a foreign matter intrusion preventing member made of a material capable of permitting lubricating oil to pass therethrough, but preventing an intrusion of a solid foreign matter.

According to this aspect, since the use has been made of the sealing device, an undesirable intrusion of the foreign matter into the inside of the bearing assembly can be avoided. With the sealing device so utilized, the foreign matter intrusion preventing member forming a part thereof serves to permit the lubricating oil to pass therethrough, but to inhibit the intrusion of the solid foreign matter. Accordingly, only the clean oil having no foreign matter or the like contained therein can be supplied into the inside of the bearing assembly as the lubricating oil, thus allowing the bearing assembly to maintain its functionality as a bearing. Therefore, exfoliation of the raceway surfaces and that of a rolling contact surface, both resulting from the intrusion of the foreign matter, are prevented beforehand, thus making it possible to avoid the possibility that the servicing life of the bearing assembly may undesirably become short. Also, since a foreign matter intrusion preventing function as the foreign matter intrusion preventing member is set up in a portion of the sealing device of the bearing assembly, the device in its entirety can be downsized and the structure thereof can be simplified as compared with, for example, the use of a foreign matter intrusion preventing device separate from the bearing assembly. Accordingly, the versatility of the bearing assembly to the construction machines and equipments and the general industrial machines and equipments can be enhanced.

The foreign matter intrusion preventing member referred to above may be made of a material selected from the group consisting of a non-woven fabric and a porous resin material. According to the non-woven fabric or the porous resin material, by suitably selecting a proper material, such a property as to permit the oil to pass therethrough, but to inhibit the passage therethrough of the solid foreign matter of a size larger than a hole or gap, through which the oil can pass, can be obtained and, by configuring the sealing structure so as to take advantage of such property, only clean oil can be supplied into the inside of the bearing assembly for lubrication of the latter.

The sealing device referred to above may include a sealing plate member fixed to such one of the inner and outer rings, in which case the foreign matter intrusion preventing member is provided in a radial tip end portion of the sealing plate member and is held in contact with the other of the inner and outer rings. In this case, the sealing plate member is fixed to the inner ring or the outer ring, and the foreign matter intrusion preventing member provided at the radial tip end portion of this sealing plate member is held in contact with a portion of the bearing ring confronting therewith. By so constructing the sealing device, only the clean oil can be supplied into the inside of the bearing assembly and be used for lubrication. Since the foreign matter intrusion preventing member is provided at the radial tip end portion of the sealing plate member, the structure of the sealing device can be simplified.

Alternatively, the sealing device referred to above may include a sealing plate member fixed to such one of the inner and outer rings and an elastic sealing member provided in a radial tip end portion of the sealing plate member, in which case the foreign matter intrusion preventing member is provided in a tip end portion of the elastic sealing member; the elastic sealing member has a cutout defined at a plurality of circumferential areas of the tip end portion thereof and covered by the respective foreign matter intrusion preventing member; and a tip end of a portion of the foreign matter intrusion preventing member, where the cutout is defined, and a tip end of a portion of the elastic sealing member, where no cutout is defined, are held in contact with such other of the inner and outer rings. In this case, the foreign matter intrusion preventing member forming a part of the sealing device serves to avoid an undesirable intrusion of the solid foreign matter, but to allow the lubricating oil to pass therethrough into the inside of the bearing assembly. Since the tip end of the portion of the elastic sealing member included in the sealing device, where no cutout is defined, is held in contact with the bearing ring, an effect of preventing the intrusion of the foreign matter can be enhanced as compared with a sealing device employing no elastic sealing member.

The sealing device referred to above may include a sealing plate member fixed to such one of the inner and outer rings and having an aperture extending from inside to outside, and vice versa, of the bearing assembly; and a sealing lip provided in the radial tip end portion of the sealing plate member and held in contact with such other of the inner and outer rings; in which case the foreign matter intrusion preventing member is set up in the aperture formed in the sealing plate member. In this case, with the use of, for example, a mesh-like member as the foreign matter intrusion preventing member, it is possible to allow the lubricating oil to pass therethrough into the inside of the bearing assembly, but to inhibit the intrusion of the solid foreign matter therethrough. The foreign matter or the like tending to intrude through between the tip end of the sealing device and the bearing ring is intercepted by the sealing lip.

The rolling bearing assembly referred to above may be a tapered roller bearing assembly of which inner rings has a collar at both ends thereof, in which case the sealing plate member is fixed having been mounted on an outer diametric surface of a large diameter end collar of the inner ring. In this case, the sealing device can be easily fixed to the inner ring and the number of assembling steps can be reduced accordingly. An inner peripheral surface of the inner ring may be provided with an escape recess that is indented in a direction towards an outer diametric side, in which case the sealing plate member is fixedly inserted into this escape recess. In this case, the sealing device can be retained by the rolling bearing assembly alone and the handling during the assemblage of the rolling bearing assembly can be eased. By way of example, there is no need for a user, who is desirous of using the bearing assembly, to incorporate the sealing device and, therefore, the number of assembling steps can be reduced.

The outer ring referred to above may have a raceway surface extension formed by extending an outer ring raceway surface in an outer ring widthwise direction, in which case the tip end of the sealing device is held in contact with the raceway surface extension. The outer ring may have a raceway surface extension formed by extending an outer ring raceway surface in an outer ring widthwise direction, in which case alternatively the sealing lip may be held in contact with the raceway surface extension. In those cased, with the tip end of the sealing device or the sealing lip of the sealing device caused to contact the raceway surface extension in the radial direction, only the clean oil having no foreign matter or the like contained therein can be supplied into the inside of the bearing assembly as the lubricating oil.

The rolling bearing assembly according to a second aspect of the present invention includes an inner ring and an outer ring, and a plurality of rolling elements interposed between the inner and outer rings; and a sealing device having a base end fixed to one of the inner and outer rings and also having a tip end held in contact with the other of the inner and outer rings to thereby seal a bearing space delimited between the inner and outer rings, in which case the sealing device includes a sealing plate member, fixed to such one of the inner and outer rings, and a lip-like elastic sealing member provided in a radial tip end portion of the sealing plate member to define a minute gap between the lip-like elastic sealing member and such other of the inner and outer rings for permitting lubricating oil to pass therethrough, but preventing an intrusion of a solid foreign matter.

According to this second aspect, the lip-like elastic sealing member in the sealing device serves to allow the lubricating oil to pass through the minute gap delimited between it and the bearing ring, but to inhibit the passage of the foreign matter therethrough into the inside of the bearing assembly. As the elastic sealing member, a rubber of a kind having a weak force of straining a lip, for example, is utilized. A rubber or resinous material of a kind capable of exerting a pressing force of such a magnitude that when the tip end portion of the lip is held in contact with the bearing ring, a tip end of the lip can undergo an undulate motion enough to form the minute gap at a plurality of sites between it and the bearing ring is utilized. In other words, this minute gap serves to pass the oil therethrough, but to inhibit the passage therethrough of the foreign matter of a kind larger than the minute gap. Accordingly, only the clean oil having no foreign matter or the like contained therein can be supplied into the inside of the bearing assembly as the lubricating oil, allowing the functionality as the bearing assembly to be maintained. Accordingly, exfoliation of raceway surfaces and that of a rolling contact surface, both resulting from the intrusion of the foreign matter, can be prevented beforehand, thus making it possible to avoid the possibility that the servicing life of the bearing assembly may undesirably become short.

A magnetized member for adsorbing frictionally ground particles of a magnetic material, which is the foreign matter contained in the lubricating oil, may be provided in a portion of the sealing device. In this case, by the effect of a magnetic force exerted by the magnetized member, the frictionally ground particles are forcibly removed from the lubricating oil containing the frictionally ground particles. Accordingly, only the clean oil having no foreign matter or the like contained therein can be supplied into the inside of the bearing assembly.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a fragmentary longitudinal sectional view of a rolling bearing assembly designed in accordance with a first preferred embodiment of the present invention;
Fig. 1B is an enlarged sectional view of a sealing device employed in the rolling bearing assembly;
Fig. 2A is a fragmentary longitudinal sectional view of the rolling bearing assembly designed in accordance with a second preferred embodiment of the present invention;
Fig. 2B is an enlarged sectional view of the sealing device employed in the rolling bearing assembly;
Fig. 3 is a fragmentary longitudinal sectional view of the rolling bearing assembly designed in accordance with a third preferred embodiment of the present invention;
Fig. 4 is an enlarged longitudinal sectional view of the sealing device employed in the rolling bearing assembly designed in accordance with a fourth preferred embodiment of the present invention;
Fig. 5 is a fragmentary longitudinal sectional view of an important portion of the sealing device employed in the rolling bearing assembly designed in accordance with a fifth preferred embodiment of the present invention;
Fig. 6 is a fragmentary longitudinal sectional view of the rolling bearing assembly designed in accordance with a sixth preferred embodiment of the present invention;
Fig. 7 is a fragmentary longitudinal sectional view of an important portion of the sealing device employed in the rolling bearing assembly designed in accordance with a seventh preferred embodiment of the present invention;
Fig. 8 is a fragmentary longitudinal sectional view of the rolling bearing assembly designed in accordance with an eighth preferred embodiment of the present invention;
Fig. 9 is a fragmentary longitudinal sectional view of the rolling bearing assembly designed in accordance with a ninth preferred embodiment of the present invention;
Fig. 10A is a front elevational view of the sealing device employed in the rolling bearing assembly;
Fig. 10B is an enlarged front elevational view of the sealing device;
Fig. 11 is a fragmentary longitudinal sectional view of the rolling bearing assembly designed in accordance with a tenth preferred embodiment of the present invention;
Fig. 12 is a fragmentary top plan view of a portion of the rolling bearing assembly as viewed in arrow-headed lines XII in Fig. 11;
Fig. 13 is a fragmentary longitudinal sectional view of the rolling bearing assembly designed in accordance with an eleventh preferred embodiment of the present invention;
Fig. 14 is a fragmentary longitudinal sectional view of the rolling bearing assembly designed in accordance with a twelfth preferred embodiment of the present invention;
Fig. 15A is a fragmentary top plan view of a portion of the rolling bearing assembly as viewed in arrow-headed lines XVA in Fig. 14;
Fig. 15B is an enlarged view of an important portion of Fig. 15A;
Fig. 16 is a fragmentary longitudinal sectional view of the rolling bearing assembly designed in accordance with a thirteenth preferred embodiment of the present invention; and
Fig. 17 is an enlarged side view of an important portion of the rolling bearing assembly.

### DESCRIPTION OF PREFERRED EMBODIMENTS

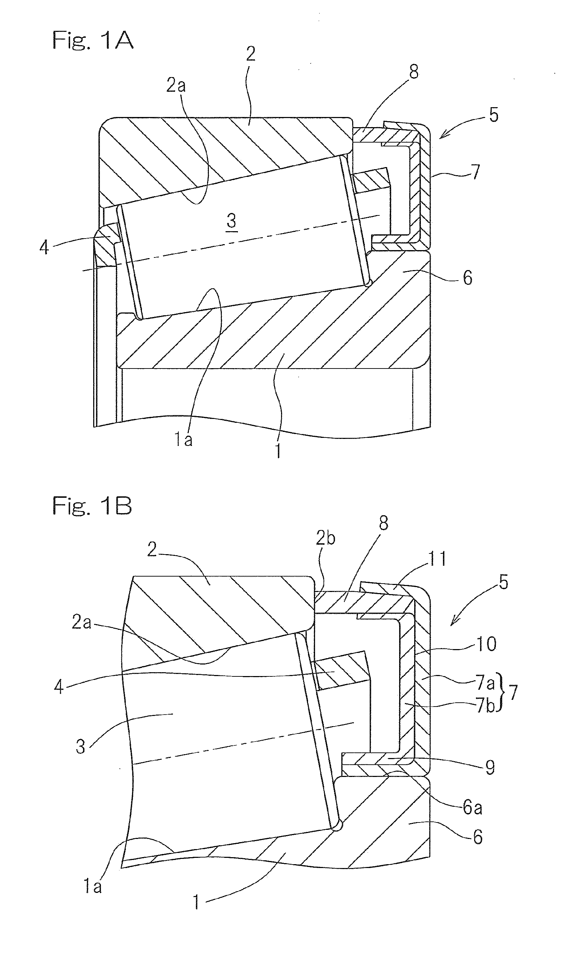

A first preferred embodiment of the present invention will be described in detail with particular reference to Figs. 1A and 1B. As shown in Fig. 1A, a rolling bearing assembly according to this first embodiment includes an inner ring 1, an outer ring 2, a plurality of rolling elements 3 interposed between respective raceway surfaces 1a and 2a of the inner and outer rings 1 and 2, a retainer 4 for retaining the rolling elements 3 in a fashion equidistantly spaced relation to each other in a direction circumferentially of the inner and outer rings 1 and 2, and a sealing device 5 for sealing a bearing space delimited between the inner and outer rings 1 and 2. As the rolling bearing assembly referred to above, a tapered roller bearing assembly is adopted and, as the rolling elements 3 referred to above, tapered rollers are adopted. The inner ring 1 is of a collared inner ring 1 having collars at opposite ends thereof, but the outer ring 2 is of a collarless outer ring 2. The inner ring 1 has a raceway surface 1a defined in an outer peripheral surface thereof, which surface 1a is rendered to be a conical surface. The inner ring 1 has a large diameter end widthwise protruding beyond the outer ring 2 a distance substantially equal to the width of a large diameter end collar (also called "large collar") 6. The outer ring 2 has a raceway surface 2a defined therein at a position held in face to face relation with the raceway surface 1a of the inner ring 1, which surface 2a is rendered to be a conical surface.

The details of the sealing device 5 will now be discussed. As best shown in Fig. 1B, the large diameter end collar 6 of the inner ring 1 has an outer diametric surface 6a to which a first or base end of the sealing device 5 is fixed while a second or tip end of the same sealing device 5 opposite to the first or base end thereof is held in contact with an outer ring end face 2b of the outer ring 2. The sealing device 5 referred to above includes an annular sealing plate member 7 which is mounted on the outer diametric surface 6a of the large diameter end collar 6 under interference fit, and a foreign material intrusion preventing member 8 made of a material effective to pass lubricating oil therethrough, but to prevent an intrusion of a solid foreign matter from passing therethrough. The sealing plate member 7 in turn includes, for example, two steel plates (or resinous plates) 7a and 7b for sandwiching the foreign matter intrusion preventing member 8 therebetween and is of a structure in which those steel plates 7a and 7b are overlapped integrally together. The sealing plate member 7 has a mounting portion 9, a radially extending upright wall portion 10 and an axially extending cylindrical wall portion 11, all defined in the sealing plate member 7 so as to occupy respective positions in the order specified above from an inner diametric side towards an outer diametric side. Of those portions, the mounting portion 9 is mounted on the outer diametric surface 6a of the large diameter end collar 6 of the inner ring 1 under interference fit. Between the two steel plates 7a and 7b in the cylindrical wall portion 11 which defines a radial tip end portion of the sealing plate member 7, a base end of the annular foreign matter intrusion preventing member 8 is sandwiched, and this foreign matter intrusion preventing member 8 has a tip end protruding in the axial direction of the bearing assembly so as to contact the outer ring end face 2b. Also, the foreign matter intrusion preventing member 8 is provided removably on the cylindrical wall portion 11.

In the instance now under discussion, the material for the foreign matter intrusion preventing member 8 is employed in the form of a non-woven fabric. When a sealing structure is so designed as to take advantage of a property of the non-woven fabric, that is, a property of permitting the oil to pass therethrough, but inhibiting the passage therethrough of a solid foreign matter of a kind having a particle size greater than the dimensions of a clearance through which the oil can pass, only clean oil is supplied through the foreign matter intrusion preventing member 8 into the inside of the bearing assembly and used for lubrication. It is to be noted that since the mounting portion 9 of the sealing plate member 7 is firmly mounted on the outer diametric surface 6a of the large diameter end collar 6 of the inner ring 1 under interference fit, a possible intrusion of the foreign matter and the oil through a contact area between the outer diametric surface 6a of the large diameter end collar 6 and the mounting portion 9 is assuredly blocked off.

According to the rolling bearing assembly of the structure hereinabove described, the foreign matter intrusion preventing member 8 of the sealing device 5 allows the lubricating oil therethrough into the inside of the bearing assembly, but prevents the slid foreign matter from intruding into the inside of the bearing assembly. Accordingly, only the clean oil free from the foreign matter or the like, that is, the clean oil that does not contain the foreign matter or the like mixed therein is supplied into the inside of the bearing assembly as the lubricating oil, thus maintaining a functionality as the bearing assembly. Accordingly, exfoliation of the raceway surfaces 1a and 2a and that of a rolling contact surface, both resulting from the intrusion of the foreign matter, are prevented beforehand, thus making it possible to avoid the possibility that the servicing life of the bearing assembly may undesirably become short. Also, since a foreign matter intrusion preventing function is set up with a portion of the sealing device 5 of the bearing assembly constituted by the foreign matter intrusion preventing member 8, the device in its entirety can be downsized and the structure thereof can be simplified as compared with, for example, the use of a foreign matter intrusion preventing device separate from the bearing assembly. Accordingly, the versatility of the bearing assembly to the construction machines and equipments and the general industrial machines and equipments can be enhanced.

Since the foregoing rolling bearing assembly is a tapered roller bearing assembly of a type utilizing the inner ring 1 having a collar at both ends thereof and since the mounting portion 9 of the sealing plate member 7 is fixedly mounted on the outer diametric surface 6a of the large diameter end collar 6 of the inner ring 1, the sealing device 5 can be simply fixed to the inner ring 1 and the number of assembling steps can be reduced. Also, since the base end of the foreign matter intrusion preventing member 8 is sandwiched in between the two steel plates 7a and 7b in the cylindrical wall portion 11 which defines the radial tip end portion of the sealing plate member 7 and the foreign matter intrusion preventing member 8 is removably provided on the cylindrical wall portion 11, only the foreign matter intrusion preventing member 8 can be easily replaced at the time of, for example, maintenance of the bearing assembly. It is nevertheless possible to replace the sealing device 5 in its entirety.

Hereinafter, second to thirteenth preferred embodiments of the present invention will be discussed in detail. It is, however, to be noted that in the description that follows, component parts, which are referred to in describing one of the preferred embodiments, but which are similar to or corresponding to those referred to in any of the remaining preferred embodiments, are designated by like reference numerals and the details thereof are not reiterated for the sake of brevity. Where in describing one of the preferred embodiments, only a portion of the construction is referred to, other portions of such construction are to be understood as similar to those referred to in the previously described preferred embodiment or embodiments. Not only can component parts, which are specifically referred to in describing each of the preferred embodiments, be combined, but also parts of the preferred embodiments can be combined unless such combination pose any problem.

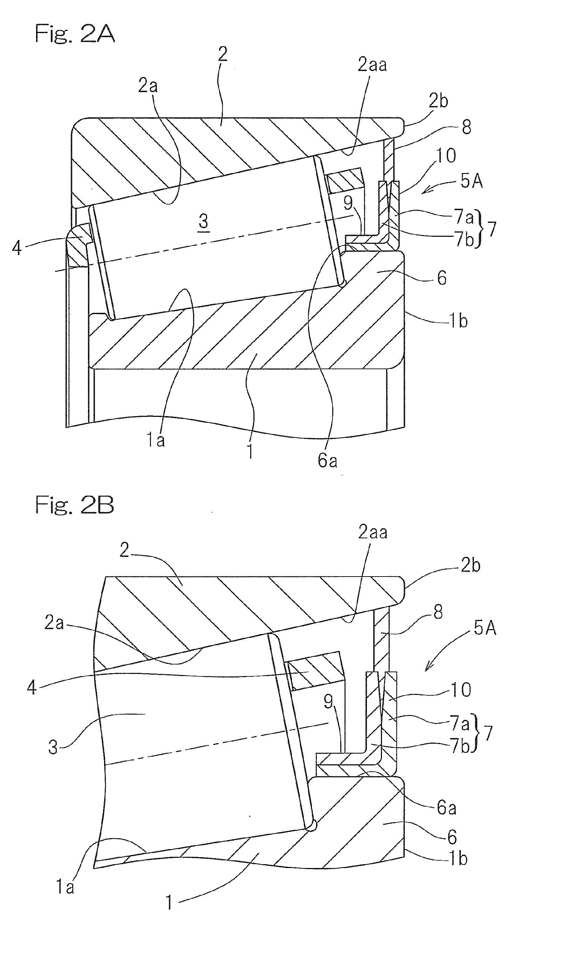

The rolling bearing assembly designed in accordance with the second preferred embodiment shown in Figs. 2A and 2B has a raceway surface extension 2aa that extends from the outer ring raceway surface 2a in the widthwise direction of the outer ring. This raceway surface extension 2aa is smoothly continued to the outer ring raceway surface 2a with no step relative to such outer ring raceway surface 2a and forms the conical surface of the same angle as that of the outer raceway surface 2a. Also, an end face 1b of the inner ring 1 on the side of the large diameter end collar 6 and an axial position of an outer ring end face 2b where the raceway surface extension 2aa exists are so formed as to substantially align with each other. The foreign matter intrusion preventing member 8 has a tip end caused to contact the raceway surface extension 2aa of the outer ring 2. The sealing plate member 7 of the sealing device 5A is of an L-sectioned shape defined by the mounting portion 9 and the upright wall portion 10. Between the two steel plates 7a and 7b in the upright wall portion 10, which will become a radial tip end portion of the sealing plate member 7, the base end of the foreign matter intrusion preventing member 8 is sandwiched, and the tip end of this foreign matter intrusion preventing member 8 is held in radial contact with the raceway surface extension 2aa of the outer ring 2. Other structural features are similar to those in the rolling bearing assembly shown in and described with particular reference to Fig. 1A.

Even in the second embodiment of the present invention described above, the foreign matter intrusion preventing member 8 of the sealing device 5A serves to allow the lubricating oil to pass therethrough into the inside of the bearing assembly, but to prevent the solid foreign matter from intruding thereinto. Accordingly, only the clean oil free from the foreign matter or the like is supplied as the lubricating oil into the inside of the bearing assembly, thus maintaining the functionality as the bearing assembly. Other functions and effects are similar to those afforded by the rolling bearing assembly shown in and described with particular reference to Fig. 1A.

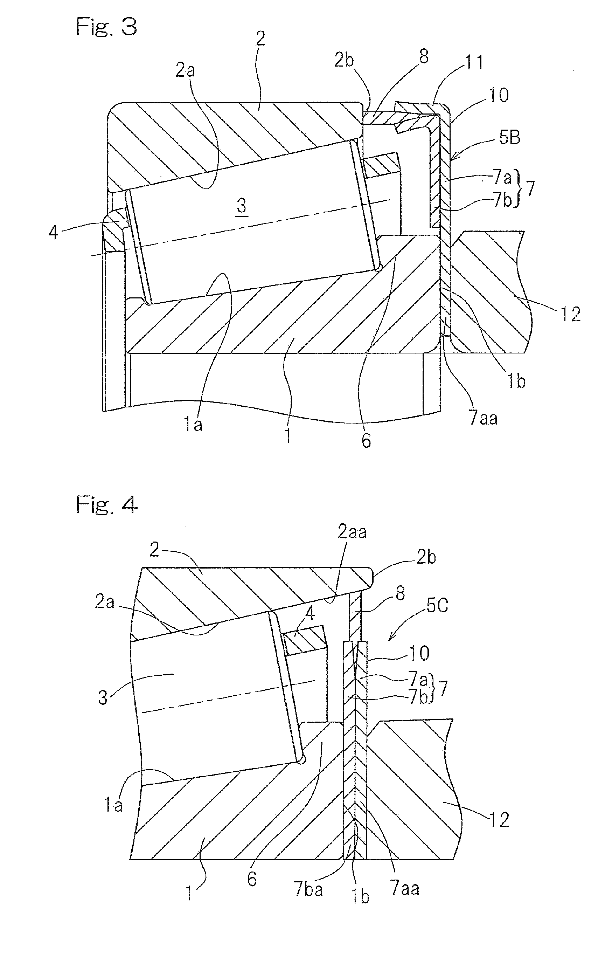

According to the third preferred embodiment of the present invention shown in Fig. 3, the rolling bearing assembly shown therein is such that a portion of the sealing plate member 7 of the sealing device 5B is fixedly sandwiched in between the end face 1b of the inner ring 1 on the side of the large diameter end collar 6 and a counterpart member 12 such as, for example, an inner ring spacer. The sealing plate member 7 of this sealing device 5B includes the upright wall portion 10 and the cylindrical wall portion 11. Of the two steel plates 7a and 7b used to sandwich the foreign matter intrusion preventing member 8, the steel plate 7b on an inner side is of an L-sectioned shape provided over the cylindrical wall portion 11 and a radial upper half portion of the upright wall portion 10. Only a radial lower half portion 7aa of the steel plate 7a, forming a part of the upright wall portion 10 on an outer side, is fixed having been sandwiched in between the end face 1b of the inner ring 1 on the side of the large diameter end collar 6 and the counterpart member 12.

According to the third embodiment of the present invention described above, since a portion of the sealing plate member 7 is fixedly sandwiched in between the end face 1b of the inner ring 1 on the large diameter end side and the counterpart member 12, a widthwise acting force works between the counterpart member and the inner ring end face 1b by means of, for example, a preload of the bearing assembly. Accordingly, the radial lower half portion 7aa of the steel plate 7a, forming a part of the upright wall portion 10 on the outer side, is urged towards the inner ring end face 1b with the sealing device 5B firmly fixed consequently. Therefore, an undesired separation of the sealing device 5B from the bearing assembly under the influence of vibrations or the like can be avoided. Also, because of the use of the foreign matter intrusion preventing member 8 of the sealing device 5B, only the clean oil free from the foreign matter or the like can be supplied into the inside of the bearing assembly as the lubricating oil. It is to be noted that the counterpart member 12 for sandwiching a portion of the sealing plate member 7 may not be limited to the inner ring spacer as described above, but any other member such as, for example, a shaft or a flange may be used for the counterpart member 12.

According to the fourth preferred embodiment of the present invention shown in Fig. 4, the rolling bearing assembly shown therein has a raceway surface extension 2aa, which is formed by extending the outer ring raceway surface 2a in an outer ring widthwise direction. The sealing plate member 7 forming the sealing device 5C is comprised of an upright wall portion 10. Radial lower half portions 7aa and 7ba of the two steel plates 7a and 7b forming the upright wall portion 10 is fixed having been sandwiched in between the end face 1b of the inner ring 1 on the large diameter end collar 6 side and the counterpart member 12 such as, for example, an inner ring spacer. With the base end of the foreign matter intrusion preventing member 8 sandwiched in between the two steel plates 7a and 7b of the upright wall portion 10, the tip end of the foreign matter intrusion preventing member 8 is held in radial contact with the raceway surface extension 2aa of the outer ring 2. Other structural features are similar to those in the rolling bearing assembly shown in and described with particular reference to Fig. 3. In this case, the structure of the sealing device 5C can be simplified and the cost of manufacture can also be reduced, as compared with those shown in and described with particular reference to any of Figs. 1A and 1B to Fig. 3. Other functions and effects are similar to those afforded by the rolling bearing assembly shown in and described with particular reference to Fig. 3.

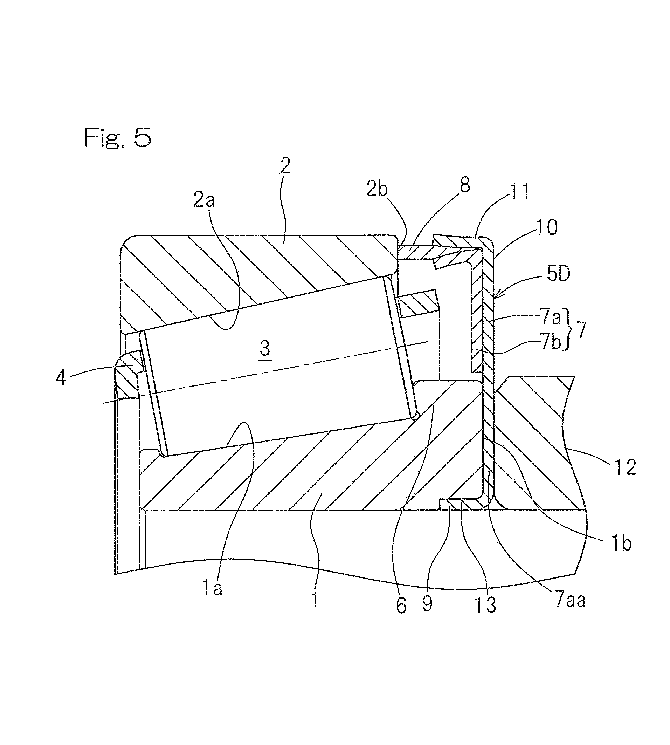

In the fifth preferred embodiment of the present invention shown in Fig. 5, the rolling bearing assembly shown therein is such that an escape recess 13 is formed in an inner peripheral surface of the inner ring 1 so as to be indented in a direction towards an outer diametric side and the sealing plate member 7 is fixedly inserted into this escape recess 13 so formed. The escape recess 13 is formed in a portion of the inner peripheral surface of the inner ring 1, which is spaced a predetermined distance in an axial direction from a corner continued from the end face 1b of the inner ring 1 on the side of the large diameter end collar 6 as clearly shown in Fig. 5. The sealing plate member 7 of the sealing device 5D includes the mounting portion 9, the upright wall portion 10 and the cylindrical portion 11. The radially lower half portion of the steel plate 7a forming a part of the upright wall portion 10 on the outer side thereof, is sandwiched in between the end face 1b of the inner ring 1 on the side of the large diameter end collar 6 and the counterpart member 12 such as, for example, an inner ring spacer, and the mounting portion 9 of the sealing plate member 7 is integrally connected with an inner peripheral side end of the radial lower half portion 7aa. This mounting portion 9 is fixed in position having been inserted into the escape recess 13. Other structural features are similar to those employed in the rolling bearing assembly of the structure shown in and described with particular reference to Fig. 3. Since the mounting portion 9 is fixed in position having been inserted into the escape recess 13 as hereinabove described, the sealing device 5D can be retained in position in the rolling bearing assembly alone and the handling thereof during the assemblage of the rolling bearing assembly can be eased as compared with the structure shown in and described with reference to Fig. 3. By way of example, since there is no need for a user, who is desirous of using the bearing assembly, to incorporate the sealing device 5D, the number of assembling steps can be reduced.

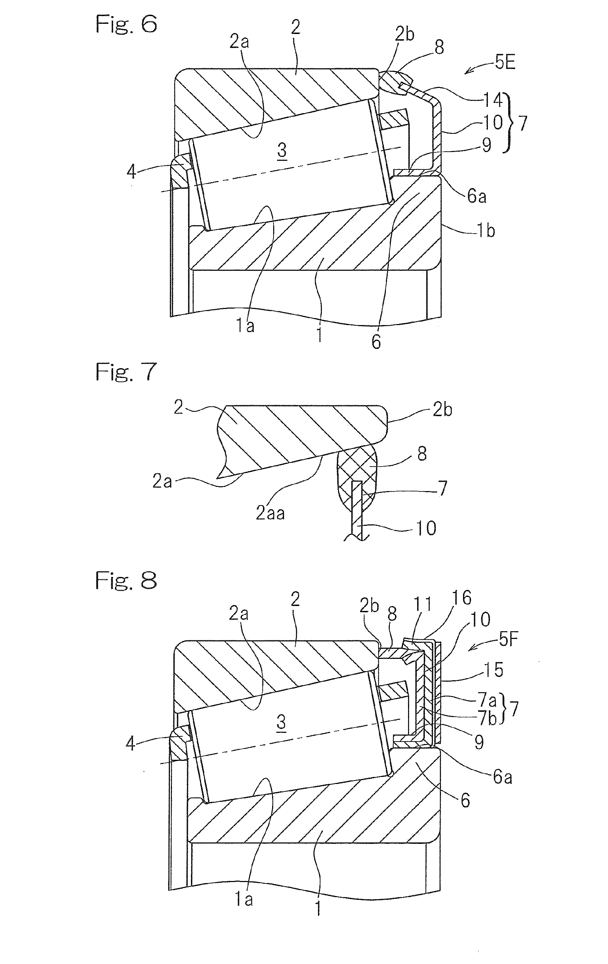

The rolling bearing assembly designed in accordance with the sixth preferred embodiment of the present invention shown in Fig. 6 is such that the foreign matter intrusion preventing member 8 is made of a porous resin material and has its tip end held in contact with the outer ring end face 2b. The sealing plate member 7 of the sealing device 5E in this embodiment is made up of a single steel plate or a single resinous plate and has a mounting portion 9, a radially extending upright wall portion 10 and an inclined wall portion 14, all defined in the sealing plate member 7 so as to occupy respective positions in the order specified above from an inner diametric side towards an outer diametric side. The inclined wall portion 14 has an angle of inclination extending towards an outer diametric side as it goes towards a bearing inner side and continues to a position in the vicinity of the outer ring end face 2b. The base end of the foreign matter intrusion preventing member 8 is fixed to a tip end of the inclined wall portion 14 and a tip end of the foreign matter intrusion preventing member 8 is caused to contact the outer ring end face 2b. Other structural features are similar to those of the rolling bearing assembly of the structure shown in and described with particular reference to Fig. 1A. In this case, when the sealing structure is so designed as to take advantage of a property of the porous resin used as a material for the foreign matter intrusion preventing member 8, that is, the property of the porous resin material which serves to allow the oil to pass therethrough, but to inhibit the passage therethrough of the solid foreign matter of a kind having a particle size greater than the size of constituent particles of the oil, only the clean oil can be supplied into the inside of the bearing assembly and used for lubrication. Since the sealing plate member 7 is made up of the single steel plate or the single resinous plate, the number of component parts and the cost of manufacture can be reduced as compared with those employed in any one of the previously described embodiments of the present invention.

In the seventh preferred embodiment of the present invention shown in Fig. 7, the rolling bearing assembly shown therein is such as to have a raceway surface extension 2aa of a kind in which the outer ring raceway surface 2a is extended in the outer ring widthwise direction. The tip end of the foreign matter intrusion preventing member 8, made of the previously described porous resin material, is caused to contact the raceway surface extension 2aa of the outer ring 2 in a radial direction. Other structural features are similar to those employed in the rolling bearing assembly shown in and described with particular reference to Fig. 6. Since even the sealing plate member 7 in this case is made up of the single steel plate or the single resinous plate, the number of component parts and the cost of manufacture can be reduced.

The sealing device 5F, designed in accordance with the eighth preferred embodiment of the present invention shown in Fig. 8, has a portion thereof provided with a magnetized member 15. The sealing plate member 7 of the sealing device 5F has an insulating material 16 provided on a surface of the cylindrical wall portion 11 and that of the upright wall portion 10. On a surface of the insulating material 16 provided on the upright wall portion 10, the magnetized member 15 capable of adsorbing frictionally ground, magnetic particles, which are the foreign matter contained in the lubricating oil is provided. This magnetized member 15 is made up of an annular plate segment that is magnetized, such as, for example, a disc-shaped permanent magnet and this permanent magnet is fitted to a sealing end face so that foreign matter solids (such as, for example, the frictionally ground particles), which come to a sealing area, can be accumulated. Other structural features are similar to those employed in the rolling bearing assembly shown in and described with particular reference to Fig. 1A. In this case, by the effect of magnetism developed by the magnetized member 15, the frictionally ground particles can be forcibly removed from the lubricating oil that contains frictionally ground particles. Accordingly, only the clean oil free from the foreign matter or the like can be supplied into the inside of the bearing assembly.

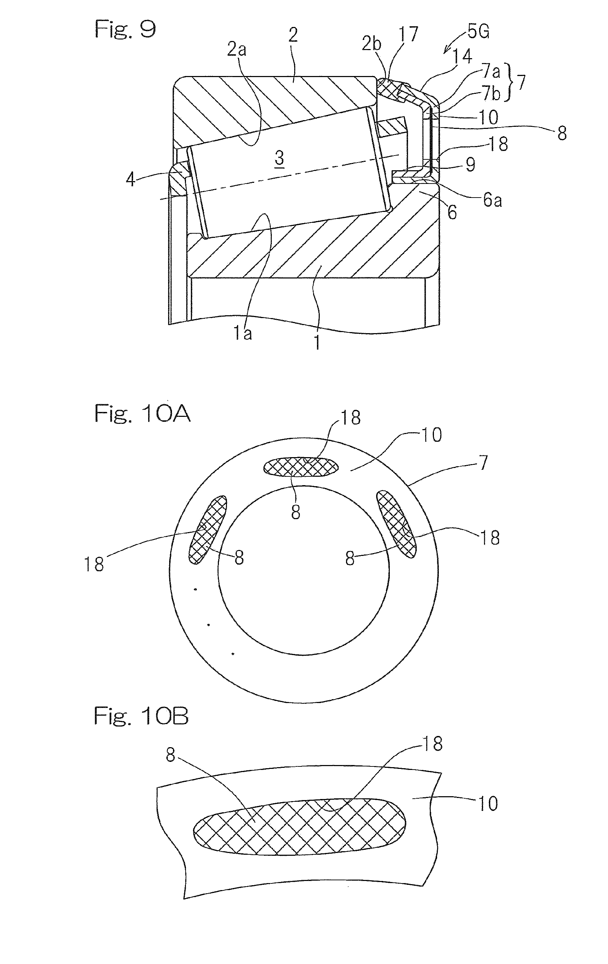

In the ninth preferred embodiment of the present invention shown in Fig. 9 and Figs. 10A and 10B, a sealing lip 17 is fitted to a radial tip end portion of the sealing plate member 7, with a tip end of this sealing lip 17 held in contact with a portion of the outer ring 2 (the outer ring end face 2b in this embodiment). In addition, in the upright wall portion of the sealing plate member 7, an aperture 18 extending from inside to outside, and vice versa, of the bearing assembly is provided in a plural number in a circumferentially equidistantly spaced relation, and the foreign matter intrusion preventing member 8, which is in the form of, for example, a mesh member capable of permitting the oil to pass therethrough, but inhibiting the passage of the solid foreign matter of a size greater than the dimension of a hole through which the oil passes, is set up in each of those apertures 18. The mesh member referred to above is of a structure in which a plurality of wire members are provided at a predetermined distance and are crisscrossed relative to each other so as to inhibit the passage therethrough of the solid foreign matter of a size greater than the dimension of the hole through which the oil can pass. The foreign matter intrusion preventing member 8 is supported having been sandwiched in between the two steel plates 7a and 7b. Other structural features are similar to those employed in the rolling bearing assembly shown in and described with particular reference to Fig. 6. In this case, it is possible to permit the lubricating oil to pass into the inside of the bearing assembly, but to avoid an undesirable intrusion of the solid foreign matter into the inside of the bearing assembly, when a member such as, for example, the mesh member is used as the foreign matter intrusion preventing member 8. The foreign matter or the like tending to intrude through between the tip end of the sealing device 5G and the bearing ring can be intercepted by the sealing lip 17. Also, since the plurality of the apertures 18 are formed in the sealing plate member 7, the weight of the sealing device 5G can be reduced.

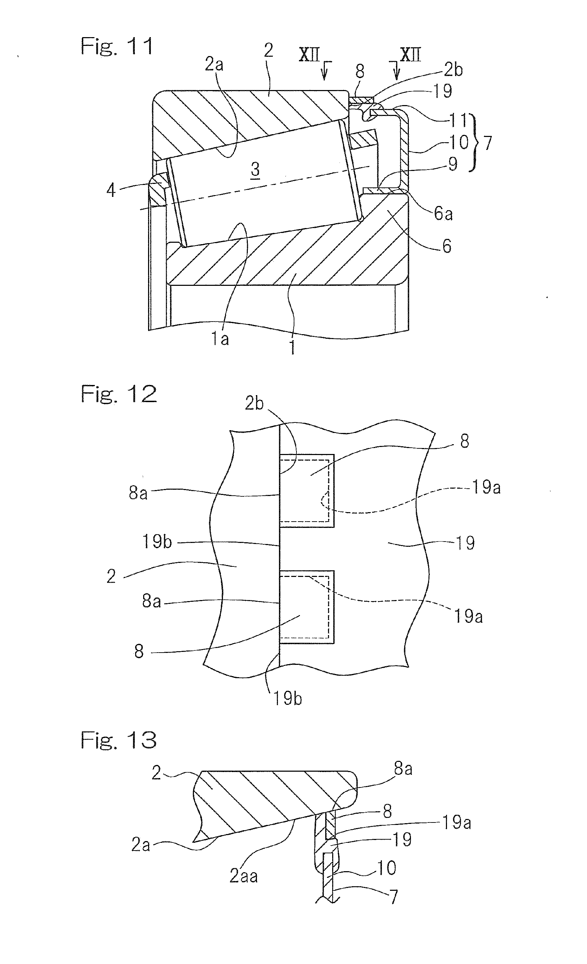

Fig. 11 illustrates a fragmentary longitudinal sectional view of the rolling bearing assembly designed in accordance with the tenth preferred embodiment of the present invention. Fig. 12 is a XII-XII line end face view of Fig. 11. In this embodiment shown in Figs. 11 and 12, an elastic sealing member 19 made of rubber or resin is provided in a radial tip end portion of the sealing plate member 7, and this elastic sealing member 19 is of a so-called comb-like shape having a cutout 19a defined at a plurality of circumferential locations of the tip end portion thereof, with each of those cutouts 19a being covered by the foreign matter intrusion preventing member 8. By way of example, although in Fig. 1A the foreign matter intrusion preventing member of an annular configuration has been shown and used, the foreign matter intrusion preventing member 8 shown in Figs. 11 and 12 is formed of a rectangular plate-like shape and is employed in a plural number while being disposed at various areas thereof, where the cutouts 19a are defined in the elastic sealing member 19, so as to cover those cutouts 19a. A tip end 8a of each of the foreign matter intrusion preventing members 8 and a cutout-less tip end 19b of the elastic sealing member 19, where there is no cutout defined, are caused to contact the outer ring end face 2b. The sealing plate member 7 referred to above is comprised of a single steel plate or a single resin plate.

In this case, the foreign matter intrusion preventing member 8 serves to permit the lubricating oil to pass therethrough, but to avoid an undesirable intrusion of the solid foreign matter therethrough. Since the elastic sealing member 19 is such that the tip end 19b, where no cutout 19a is formed, is held in contact with the outer ring end face 2b, an effect of avoiding the undesirable intrusion of the foreign matter can be highly enhanced as compared with that afforded by the sealing device of a type having no elastic sealing member employed. It is to be noted that although in this tenth embodiment of the present invention described above, the cutout 19a in the elastic sealing member 19 has been shown and described as covered by the respective foreign matter intrusion preventing member 8, the present invention is not necessarily be limited to such structure. For example, such a structure may be employed in which the elastic sealing member 19 may be made up of, for example, two annular rubber plates or two annular resin plates with an annular or rectangular shaped foreign matter intrusion preventing member(s) 8 fixedly sandwiched between two rubber plates.

The rolling bearing assembly shown in Fig. 13 and designed in accordance with the eleventh preferred embodiment of the present invention has a raceway surface extension 2aa of a kind in which the outer ring raceway surface 2a is extended in the outer ring widthwise direction. The tip end 8a of each of the foreign matter intrusion preventing members 8 and the cutout-less tip end of the elastic sealing member 19, where there is no cutout defined, are caused to contact the raceway surface extension 2aa in the radial direction. Other structural features are similar to those employed in the rolling bearing assembly shown in and described with particular reference to Figs. 11 and 12. Even in this case, the foreign matter intrusion preventing member 8 serves to permit the lubricating oil to pass therethrough into the inside of the bearing assembly, but to inhibit the passage of the solid foreign matter therethrough. Since the cutout-less tip end of the elastic sealing member 19, where there is no cutout defined, is caused to contact the raceway surface extension 2aa, the effect of avoiding the undesirable intrusion of the foreign matter can be highly enhanced as compared with that afforded by the sealing device of a type having no elastic sealing member employed.

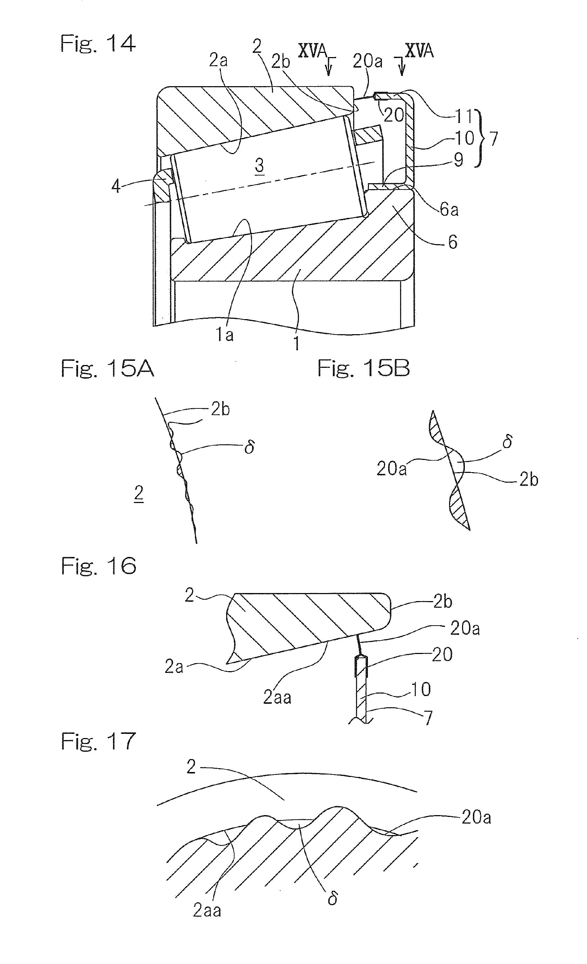

Fig. 14 illustrates a fragmentary longitudinal sectional view of the rolling bearing assembly designed in accordance with the twelfth preferred embodiment of the present invention. Fig. 15A is a XVA-XVA line end face view of Fig. 14 and Fig. 15B is an enlarged view of an important portion shown in Fig. 15A. In this twelfth embodiment, a lip-like elastic sealing member 20 is provided in a radial tip end portion of the sealing plate member 7. This elastic sealing member 20 is employed in the form of, for example, an annular member made of a rubber or resinous material of a kind having a weak force of straining the lip 20a and cooperates with the outer ring end face 2b to define a minute gap δ (best shown in Figs. 15A and 15B) that is effective to pass the lubricating oil therethrough, but to inhibit the passage of the solid foreign matter therethrough. In this case, with a tip end of the lip 20a held in contact with the outer ring end face 2b, a tip end of the lip 20a undergoes an undulate motion as best shown in Fig. 15b, accompanied by occurrence of slight minute gaps δ in an axial direction at a plurality of sites between it and the outer ring end face 2b. Those slight minute gaps δ are effective to pass the lubricating oil therethrough, but to inhibit the passage therethrough of the foreign matter of a large size greater than the minute gap δ. Accordingly, only the clean oil containing no foreign matter or the like admixed can be passed therethrough into the inside of the bearing assembly as the lubricating oil, thus maintaining the functionality as the bearing assembly. Accordingly, exfoliation, for example, of the raceway surfaces 1a and 2a and that of a rolling contact surface, both resulting from the intrusion of the foreign matter, are prevented beforehand, thus making it possible to avoid the possibility that the servicing life of the bearing assembly may undesirably become short.

Referring now to Figs. 16 and 17, the rolling bearing assembly designed in accordance with the thirteenth preferred embodiment of the present invention has a raceway surface extension 2aa of a kind in which the outer ring raceway surface 2a is extended in the outer ring widthwise direction. A tip end of the lip 20a of the elastic sealing member 20 is caused to contact the raceway surface extension 2aa in the radial direction. In this case, as best shown in and discussed with particular reference to Fig. 17, the tip end of the lip 20a undergoes an undulate motion, accompanied by occurrence of slight minute gaps δ in an radial direction at a plurality of sites between it and the raceway surface extension 2aa. Those slight minute gaps δ are effective to pass the oil therethrough, but to inhibit the passage therethrough of the foreign matter of a large size greater than the minute gap δ. Other structural features are similar to those employed in the rolling bearing assembly shown in and described with particular reference to Fig. 14. In this case, since consequent upon the undulate motion of the tip end of the lip 20a the slight minute gaps δ are formed in the radial direction between it and the raceway surface extension 2aa, only the clean oil containing no foreign matter or the like admixed can be passed therethrough into the inside of the bearing assembly as the lubricating oil, thus maintaining the functionality as the bearing assembly.

In the practice of any one of the foregoing embodiments of the present invention, the non-woven fabric, if used therein as a material for the foreign matter intrusion preventing member 8, may be replaced with a porous resin material, or the porous resin material, if alternatively used therein as a material for the foreign matter intrusion preventing member 8, may be replaced with a non-woven fabric. Particularly, although in describing the embodiment shown in Fig. 9, the mesh member has been shown and described as used as the foreign material intrusion preventing member 8, the mesh member so referred to may be replaced with a member made of a non-woven fabric or a porous resin material.

Also, although in describing any one of the foregoing embodiments of the present invention, the sealing plate member 7 has been shown and described as fixed to the inner ring 1 with the foreign matter intrusion preventing member 8 or the elastic sealing member 20 held in contact with the outer ring 2, the structure may be employed in which the sealing plate member 7 is conversely fixed to the outer ring 2 with the foreign matter intrusion preventing member 8 or the elastic sealing member 20 held in contact with the inner ring 1 (for example, the inner ring outer peripheral surface or the inner ring end face).

In addition, in the practice of any one of the foregoing embodiments except for the embodiment shown in and described with reference to Fig. 8, the magnetized member 15 may be provided in a portion of the sealing device 5 so that the frictionally ground, magnetic particles can be positively accumulated.

Although the rolling bearing assembly adopted in the practice of any one of the foregoing embodiments of the present invention has been shown and described in the form of a single row tapered roller bearing assembly, it may be of a dual row type.

Yet, any one of the sealing devices shown and described hereinbefore may be applied to a deep groove ball bearing assembly, an angular contact ball bearing assembly, a cylindrical roller bearing assembly or a self-aligning roller bearing assembly.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1 ····: inner ring
- 2 ····: Outer ring
- 2a ····: Outer ring raceway surface
- 2aa ····: Raceway surface extension
- 3 ····: Rolling element
- 5 to 5G ····: Sealing device
- 6 ····: Large diameter end collar
- 7 ····: Sealing plate member
- 8 ····: Foreign matter intrusion preventing member
- 13 ····: Escape recess
- 15 ····: Magnetized member
- 17 ····: Sealing lip
- 18 ····: Aperture
- 19 ····: Elastic sealing member
- 19a ····: Cutout
- 20 ····: Elastic sealing member

## Claims

1. A rolling bearing assembly which comprises:
an inner ring and an outer ring, and a plurality of rolling elements interposed between the inner and outer rings;
a sealing device having a base end fixed to one of the inner and outer rings and also having a tip end held in contact with the other of the inner and outer rings to thereby seal a bearing space delimited between the inner and outer rings; and
a foreign matter intrusion preventing member made of a material capable of permitting lubricating oil to pass therethrough, but preventing an intrusion of a solid foreign matter, the foreign matter intrusion preventing member being provided in at least a portion of the sealing device.

2. The rolling bearing assembly as claimed in claim 1, in which the foreign matter intrusion preventing member is made of a material selected from the group consisting of a non-woven fabric and a porous resin material.

3. The rolling bearing assembly as claimed in claim 1, in which the sealing device comprises a sealing plate member fixed to such one of the inner and outer rings and the foreign matter intrusion preventing member is provided in a radial tip end portion of the sealing plate member and is held in contact with the other of the inner and outer rings.

4. The rolling bearing assembly as claimed in claim 1, in which the sealing device comprises a sealing plate member fixed to such one of the inner and outer rings and an elastic sealing member provided in a radial tip end portion of the sealing plate member, the foreign matter intrusion preventing member being provided in a tip end portion of the elastic sealing member; in which the elastic sealing member has a cutout defined at a plurality of circumferential areas of the tip end portion thereof and covered by the respective foreign matter intrusion preventing member; and in which a tip end of a portion of the foreign matter intrusion preventing member, where the cutout is defined, and a tip end of a portion of the elastic sealing member, where no cutout is defined, are held in contact with such other of the inner and outer rings.

5. The rolling bearing assembly as claimed in claim 1, in which the sealing device comprises:
a sealing plate member fixed to such one of the inner and outer rings and having an aperture extending from inside to outside, and vice versa, of the bearing assembly;
a sealing lip provided in the radial tip end portion of the sealing plate member and held in contact with such other of the inner and outer rings; and
the foreign matter intrusion preventing member being set up in the aperture formed in the sealing plate member.

6. The rolling bearing assembly as claimed in claim 3, in which the rolling bearing assembly is a tapered roller bearing assembly of which inner rings has a collar at both ends thereof and in which the sealing plate member is fixed having been mounted on an outer diametric surface of a large diameter end collar of the inner ring.

7. The roller bearing assembly as claimed in claim 4, in which the rolling bearing assembly is a tapered roller bearing assembly of which inner rings has a collar at both ends thereof and in which the sealing plate member is fixed having been mounted on an outer diametric surface of a large diameter end collar of the inner ring.

8. The rolling bearing assembly as claimed in claim 3, in which an inner peripheral surface of the inner ring is provided with an escape recess that is indented in a direction towards an outer diametric side and the sealing plate member is fixedly inserted into this escape recess.

9. The rolling bearing assembly as claimed in claim 4, in which an inner peripheral surface of the inner ring is provided with an escape recess that is indented in a direction towards an outer diametric side and the sealing plate member is fixedly inserted into this escape recess.

10. The rolling bearing assembly as claimed in claim 1, in which the outer ring has a raceway surface extension formed by extending an outer ring raceway surface in an outer ring widthwise direction, the tip end of the sealing device being held in contact with the raceway surface extension.

11. The rolling bearing assembly as claimed in claim 5, in which the outer ring has a raceway surface extension formed by extending an outer ring raceway surface in an outer ring widthwise direction, the sealing lip being held in contact with the raceway surface extension.

12. The rolling bearing assembly as claimed in claim 1, further comprising a magnetized member for adsorbing frictionally ground particles of a magnetic material, which is the foreign matter contained in the lubricating oil, is provided in a portion of the sealing device.

13. A rolling bearing assembly which comprises:
an inner ring and an outer ring, and a plurality of rolling elements interposed between the inner and outer rings; and
a sealing device having a base end fixed to one of the inner and outer rings and also having a tip end held in contact with the other of the inner and outer rings to thereby seal a bearing space delimited between the inner and outer rings,
the sealing device comprising a sealing plate member, fixed to such one of the inner and outer rings, and a lip-like elastic sealing member provided in a radial tip end portion of the sealing plate member to define a minute gap between the lip-like elastic sealing member and such other of the inner and outer rings for permitting lubricating oil to pass therethrough, but preventing an intrusion of a solid foreign matter.

14. The rolling bearing assembly as claimed in claim 13, further comprising a magnetized member for adsorbing frictionally ground particles of a magnetic material, which is the foreign matter contained in the lubricating oil, is provided in a portion of the sealing device.
